# FASCICULE DE BREVET EUROPEEN

(11) **EP 2 999 617 B1**
(45) Date de publication et mention de la délivrance du brevet: **20.09.2017**
(21) Numéro de dépôt: 14725233.2
(22) Date de dépôt: 17.04.2014
(51) Int. Cl.: B62D 21/15

(54) **INTERFACE DE FIXATION ENTRE UN PLANCHER DE VEHICULE ET UN BERCEAU MOTEUR POUR L'ATTENUATION DE LA LOI DE DECELERATION LORS D'UN CHOC FRONTAL**
SCHNITTSTELLE ZUR BEFESTIGUNG EINES FAHRZEUGBODENS UND EINES MOTORTRÄGERS ANEINANDER ZUR ABSCHWÄCHUNG DES GESETZES DER ENTSCHLEUNIGUNG WÄHREND EINES FRONTAUFPRALLS
INTERFACE FOR ATTACHING A VEHICLE FLOOR AND AN ENGINE CRADLE TO EACH OTHER IN ORDER TO ATTENUATING THE LAW OF DECELERATION DURING A FRONTAL IMPACT

(30) Priorité: 22.05.2013 FR 1354573
(43) Date de publication de la demande: 30.03.2016
(73) Titulaire: PSA Automobiles SA, 78300 Poissy (FR)
(72) Inventeur: PERU, Marc, F-92290 Chatenay Malabry (FR); ZEITOUNI, Richard, F-78390 Bois d'Arcy (FR)
(86) Numéro de dépôt international: PCT/FR2014/050943
(87) Numéro de publication internationale: WO 2014/188098

(56) Documents cités:
- FR-A1- 2 984 839
- JP-A- 2004 130 827
- US-A- 5 605 353
- US-A1- 2012 056 447

## Description

L'invention s'inscrit dans le cadre des dispositifs de sécurité mis en oeuvre lors de l'entrée en collision d'un véhicule et en particulier en cas de collision frontale entre un véhicule et un mur rigide. L'invention a trait à une interface de fixation entre le plancher et le berceau moteur d'un véhicule qui prend en compte des contraintes de sécurité liées à un choc frontal du véhicule contre un mur rigide, tout en limitant le risque d'intrusion du berceau moteur dans l'habitacle du véhicule.

Lors d'une collision frontale, le véhicule va, dans un premier temps, absorber l'énergie du choc par déformation ou bottelage du brancard avant. Le brancard avant est une pièce de structure longitudinale placée à l'avant du véhicule et sur laquelle se fixe le moteur. Dans un deuxième temps, lorsque toutes les possibilités de déformation des éléments situés à l'avant du moteur sont épuisées, le moteur recule par rapport à l'habitacle. A cette fin, le moteur entre en contact avec le berceau moteur, fixé sur le brancard central. L'orientation du brancard central favorise la propagation des efforts non pas en direction de l'habitacle, mais en direction du plancher de l'habitacle.

Lors d'un troisième temps, le berceau moteur, sur lequel le moteur s'empile, va à son tour s'avancer en direction de l'habitacle. Les efforts circulent alors du berceau moteur vers la caisse, en particulier au niveau du plancher où il est fixé.

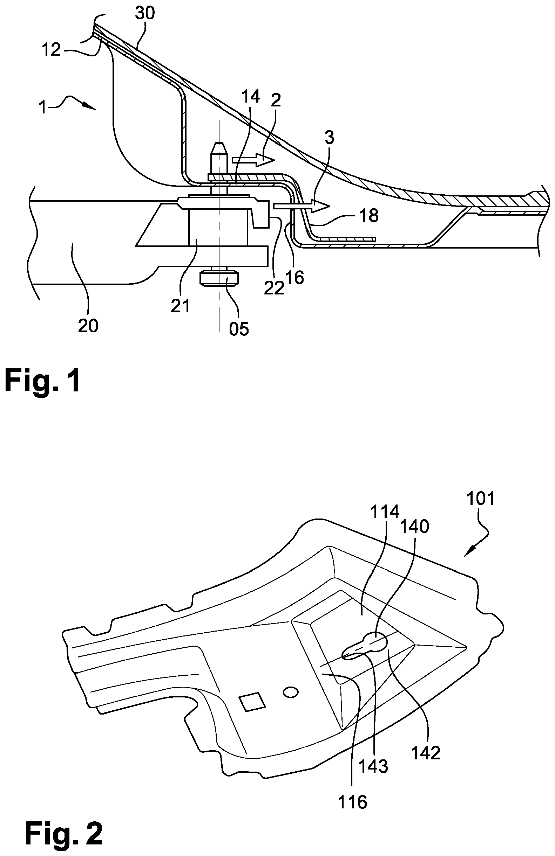

De façon connue, la transmission des efforts depuis le berceau moteur jusqu'au plancher se fait au niveau de l'interface de fixation reliant la partie arrière du berceau moteur et le plancher. La figure 1 représente une interface de fixation 01 du plancher 30 au berceau moteur 20 selon l'art antérieur. Le plancher 30 est ici une portion de la caisse du véhicule sur laquelle est rapportée l'interface de fixation. Le berceau moteur 20 y est relié au niveau de sa partie arrière par au moins un moyen de fixation 05, par exemple une vis. Une cale souple 21 est classiquement associée à la vis pour filtrer les vibrations du moteur et éviter qu'elles ne se propagent dans la caisse. C'est donc principalement par ce moyen de fixation 05 que l'effort en provenance du berceau moteur est transmis au plancher. Lors d'un choc, la cale souple va se déformer sous l'effort transmis et, une fois en butée, transmettra alors la totalité de l'effort du berceau au plancher.

L'interface de fixation se présente sous forme d'une pièce de bas de caisse 12 qui, lorsqu'elle est rapportée au plancher 30, délimite un espace entre ladite pièce de bas de caisse et ledit plancher. L'interface de fixation présente une zone de montage 14 dotée de moyens pour coopérer avec la vis de fixation 05. Typiquement, il s'agit d'un trou qui correspond au diamètre de la vis. En outre, la pièce de bas de caisse se présente par exemple sous forme de marche, de sorte à offrir une surface d'appui 16 contre laquelle le berceau moteur va venir en contact , une fois le jeu rattrapé, au niveau de la cale souple, par la force d'une collision. L'interface de fixation comprend généralement un élément de renfort 18 épousant la surface interne de cette marche afin de rigidifier la pièce de bas de caisse au niveau de la zone de montage 14 et de la surface d'appui 16.

La transmission des efforts entre le berceau moteur 20 et le plancher 30 va suivre deux voies d'effort distinctes. Une première voie 02 d'effort transite par la vis 05 elle-même, une fois le jeu de la cale souple rattrapé, au niveau de la zone de montage 14. Une deuxième voie d'effort 03 transite par la face arrière 22 du berceau moteur au niveau de la surface de butée 16. Cette deuxième voie d'effort est empruntée lorsqu'au cours du choc, la face arrière du berceau moteur translate longitudinalement jusqu'à venir en contact de la pièce de bas de caisse.

Un véhicule automobile doit typiquement être apte à garantir l'intégrité biomécanique des passagers lors d'un choc frontal à 40% de recouvrement de la partie frontale contre un obstacle capable d'absorber une partie de l'énergie du choc. Lors d'un tel choc, le risque d'intrusion à l'intérieur de l'habitacle est accru du côté de l'impact. Il est donc nécessaire de contrôler les empilages mécaniques dus au choc et de limiter le recul du moteur par le berceau afin de maîtriser les intrusions.

Un véhicule doit également garantir l'intégrité biomécanique des passagers lors d'un choc frontal 0° à 100% de recouvrement de la partie frontale contre un obstacle rigide ou mur infini, incapable d'absorber une partie de l'énergie du choc. Lors d'un tel choc, la décélération subie par le véhicule est doublée.

Contrairement au premier type de choc à 40% de recouvrement, le risque majeur du choc 0° à 100% de recouvrement est représenté par la loi de décélération du véhicule, aussi appelée Pulse. Un niveau trop important de décélération dégrade la protection biomécanique des occupants du véhicule, ce qui impose l'utilisation de moyens de retenue (airbag, ceinture pyrotechniques, ...) plus performants et plus onéreux. Au-delà d'un certain niveau de décélération, une bonne protection des occupants n'est plus possible, en particulier pour des individus de petite corpulence, les occupants aux places arrière du véhicule et les enfants.

Au contact d'un obstacle très raide, le véhicule s'arrête brutalement, son Pulse est alors élevé. L'occupant avant du véhicule est encore en mouvement par rapport à l'habitacle, et risque d'engendrer des blessures suite à un arrêt brutal, notamment au niveau du thorax, via les efforts ceinture ou airbag.

Inversement, si l'arrêt des occupants est trop progressif, trop long (ceinture « molle »), l'occupant qui avancera de trop dans l'habitacle, pourra alors être blessé par contact direct avec les éléments intrusifs (colonne, planche de bord)

Le critère Occupant Load Criterion, OLC, est une mesure connue de la « violence de l'arrêt de l'occupant » par rapport à l'habitacle (il est homogène à une décélération moyenne ressentie par l'occupant : exprimé en g (N)). Plus l'OLC est élevé, plus l'arrêt de l'occupant est brutal) :

Pour limiter le niveau de décélération d'un véhicule en fin de choc, il est connu de proposer un allongement de la longueur et ainsi d'augmenter la compressibilité du bloc avant du véhicule. En effet, la course d'absorption d'énergie du choc est égale à la seule compressibilité du véhicule. Cependant, l'augmentation de la longueur du bloc avant va à l'encontre d'une diminution de poids total recherchée, et limite les possibilités de dessins de silhouettes de la carrosserie, notamment pour les petits compacts.

Afin d'assurer la sécurité des passagers, il faudrait limiter l'intrusion du côté du choc pour satisfaire aux conditions d'un choc à recouvrement frontal de 40%. Ceci se traduit en principe par un besoin de diminution de l'enfoncement total du véhicule. D'autre part, il faudrait diminuer la décélération du véhicule pour satisfaire aux conditions d'un choc frontal à recouvrement frontal de 100 % contre un mur rigide. Ceci se traduit en principe par une augmentation nécessaire de l'enfoncement total du véhicule, ce qui engendre un antagonisme.

Le document de brevet EP 2143962 décrit un dispositif de connexion pour connecter un élément structurel du véhicule au châssis, comprenant un système d'attache par boulons. Un boulon s'étend à travers un trou dans l'élément de structure et à travers un trou dans le châssis du véhicule. Un écrou vient en prise avec l'extrémité du boulon, joignant ainsi les deux parties. Un tel dispositif permet la transmission d'efforts de l'élément structurel au châssis, mais ne permet pas de résoudre l'antagonisme décrit.

L'invention a pour objectif de pallier à au moins un des problèmes rencontrés dans l'art antérieur. L'invention a pour objectif de proposer un dispositif qui permet d'assurer la sécurité des passagers d'un véhicule sous l'effet des deux types de chocs décrits, à savoir un choc à recouvrement frontal de 40% contre un obstacle déformable, et un choc frontal à recouvrement frontal de 100 % contre un obstacle rigide. Le document JP 2004 130827 A divulgue une interface de fixation selon le préambule de la revendication 1. L'invention a pour objet une interface de fixation d'un plancher de véhicule à un berceau moteur. L'interface présente une zone de montage destinée à recevoir des moyens de fixation pour la fixation du berceau sur le plancher. L'interface est remarquable en ce que la zone de montage comprend une fente de guidage destinée à faciliter un rapprochement entre le berceau et le plancher dans la direction avant-arrière du véhicule suite à un choc frontal du véhicule.

De préférence, la fente de guidage peut être apte à coopérer avec les moyens de fixation, et notamment avec une vis, au niveau d'une première extrémité. Avantageusement, la fente peut être délimitée par une butée d'arrêt au niveau d'une deuxième extrémité. Cette disposition permet au moyen de fixation, et notamment à une vis ou un boulon, de coulisser le long de la fente de guidage suite à un choc frontal du véhicule, d'une position initiale située à la première extrémité de la fente, jusqu'à sa deuxième extrémité.

De préférence, l'interface peut comprendre des moyens destinés à maintenir les moyens de fixation en place en l'absence d'un choc du véhicule. Ces moyens peuvent de préférence comprendre une zone à résistance amoindrie le long de la direction de la fente de guidage.

L'interface de fixation comprend au moins une surface d'appui contre laquelle le berceau entre en contact lorsqu'il se rapproche du plancher. Ceci pour limiter le recul du berceau, une fois la course de coulissement dans la fente effectuée, évitant ainsi d'augmenter les intrusions en cas de choc décalé. De préférence, la longueur de la fente de guidage peut être supérieure à la distance nécessaire au berceau pour entrer en contact avec au moins une des surfaces d'appui suite à un choc frontal du véhicule.

Une surface d'appui, contre laquelle la face arrière du berceau entre en contact lorsqu'il se rapproche du plancher, peut de préférence former un angle non droit avec la zone de montage de l'interface de fixation.

Au moins une surface d'appui peut préférentiellement être disposée de façon à entrer en contact avec un ergot correspondant du berceau lorsque celui se rapproche du plancher.

De préférence, au moins une des surfaces d'appui peut être une surface à déformation programmée sous l'effet d'un appui du berceau suite à un choc frontal du véhicule.

L'interface de fixation peut avantageusement être issue d'un procédé d'emboutissage d'une tôle métallique ayant une épaisseur comprise entre 2 et 2,2 mm. De préférence, son épaisseur est soit de 2 mm ou de 2,2 mm.

L'invention a également pour objet un véhicule automobile comprenant un plancher et un berceau moteur fixé au dit moteur. Le véhicule est remarquable en ce que le plancher présente une interface de fixation conforme à l'invention pour sa fixation avec le berceau moteur.

Le dispositif selon la présente invention permet de pallier aux exigences antagonistes du choc frontal décalé à 40% de recouvrement frontal et du choc frontal à 100 % de recouvrement frontal contre un mur rigide. Le dispositif permet le recul de l'ensemble formé par le moteur empilé sur le berceau du moteur par rapport au plancher du véhicule afin d'augmenter la compressibilité du bloc avant du véhicule. Le dispositif permet le déplacement du berceau moteur sous le plancher du véhicule lorsque l'effort du choc est supérieur à un seuil limite. D'autre part, l'envergure du déplacement est limitée par la longueur de la fente de guidage qui vise à maintenir la connexion entre le berceau et le plancher. Ainsi le dispositif et le véhicule équipé du dispositif selon l'invention permettent d'augmenter la sécurité des occupants du véhicule, en particulier lors des deux types de chocs précités.

A partir de l'instant où s'active le coulissement de la fixation dans la fente, l'effort transmis au plancher chute fortement et, par suite, le Pulse (la décélération du véhicule) est limité environ à la valeur constante que la décélération avait atteinte juste avant l'activation du coulissement de la fixation. En utilisant le dispositif conforme à l'invention l'ordre de grandeur peut atteindre jusqu'à - 30% de gain sur la valeur maximale du Pulse, par rapport à un véhicule non-équipe. L'invention permet un gain sur le critère OLC jusqu'a -4g de réduction.

D'autres caractéristiques et avantages de la présente invention seront mieux compris à l'aide de la description et des dessins parmi lesquels :
- la figure 1 est une représentation schématique d'une coupe longitudinale d'une interface de fixation selon l'art antérieur ;
- la figure 2 est une illustration en perspective vue d'en bas d'une interface de fixation selon un mode de réalisation préférentiel de l'invention ;
- la figure 3 est une représentation schématique d'une coupe longitudinale d'une interface de fixation selon un mode de réalisation préférentiel de l'invention ;
- la figure 4 est une illustration en perspective vue d'en bas d'une interface de fixation selon un mode de réalisation préférentiel de l'invention ;
- la figure 5 est une représentation schématique d'une coupe longitudinale d'une interface de fixation selon un mode de réalisation préférentiel de l'invention ;
- la figure 6 est une illustration en perspective vue d'en bas d'une interface de fixation selon un mode de réalisation préférentiel de l'invention.

Dans les paragraphes suivants, des numéros de référence similaires sont utilisés pour décrire des concepts similaires à travers des modes de réalisations différents du dispositif selon l'invention. Ainsi les numéros de référence 101, 201, 301 décrivent des modes de réalisation alternatifs de l'interface de fixation selon l'invention.

L'invention proposée consiste à permettre le recul, suite à un choc frontal d'un véhicule, de l'ensemble moteur empilé sur le berceau moteur, par rapport au plancher du véhicule. Ceci augmente la compressibilité du bloc avant du véhicule et permet de diminuer la loi de décélération du véhicule lors d'un choc frontal à 100% de recouvrement frontal contre un obstacle rigide. Le dispositif selon l'invention permet un recul contrôlé du berceau par rapport au plancher dans la zone arrière du berceau. Lorsque la course de recul maximal est atteinte, un dispositif de limitation de recul stoppe le berceau, évitant ainsi d'augmenter le risque d'intrusion en choc décalé à 40% de recouvrement frontal. Ceci explique de manière générale le principe sous-jacent de l'invention. Les paragraphes suivants décrivent de manière exemplaire des modes de réalisation préférentiels du dispositif selon l'invention.

La figure 1 a été décrite au préalable. La figure 2 montre une interface de fixation selon un mode de réalisation préférentiel de l'invention. L'interface 101 est de préférence façonnée, par exemple par emboutissage, à partir d'une tôle métallique ayant une épaisseur de 2,2 mm. Son installation entre le plancher et le berceau du moteur est similaire à l'illustration du dispositif d'art antérieur de la figure 1. Cependant, au lieu de présenter un trou de section essentiellement circulaire et correspondant à la section de la vis de fixation, le dispositif 101 comprend un trou oblong ou une fente de guidage 140 au niveau de la zone de montage 114. La fente de guidage est apte à coopérer avec une vis de fixation qui relie le berceau du moteur au plancher du véhicule. A cette fin, une partie à section correspondante à la section de la vis est prévue à une première extrémité 142 de la fente 140. La fente se prolonge en direction du plancher ou de l'habitacle du véhicule par une zone allongée de largeur plus restreinte. Une butée d'arrêt 143 emboutie est de préférence prévue à la deuxième extrémité de la fente.

La surface d'appui 116 est fragilisée par rapport à la surface correspondante 16 du dispositif connu de la figure 1. Ceci est réalisé par l'amincissement de la tôle correspondante à une épaisseur de 2,2 mm, et à l'enlèvement de la partie de renfort 18. Ces modifications permettent d'un côté le comportement décrit au paragraphe suivant, et d'autre part elles engendrent un gain de masse au niveau du véhicule.

Suite à un impact frontal à 100 % de recouvrement contre un mur rigide, un pic d'effort vient pousser la partie arrière du berceau contre la surface 116, qui va céder par déformation au-delà d'un effort seuil. Le berceau peut poursuivre sa course en-dessous du plancher sur une certaine distance. L'effort seuil peut être adapté par l'homme du métier en choisissant une épaisseur de tôle appropriée, la largeur de la partie réduite de la fente de guidage 140 ainsi que le couple de serrage de la vis de fixation. L'effort va engendrer un coulissement de la vis de fixation le long de la section à largeur réduite de la fente de guidage 140. La butée 143 permet d'arrêter brusquement le mouvement de recul du berceau en mettant fin au mouvement de coulissement de la vis de fixation, de façon à limiter le risque d'intrusion dans l'habitacle du véhicule. De préférence, la longueur de la fente de guidage est supérieure à la distance qui sépare la face arrière du berceau du moteur de la surface d'appui 116 en absence de choc du véhicule.

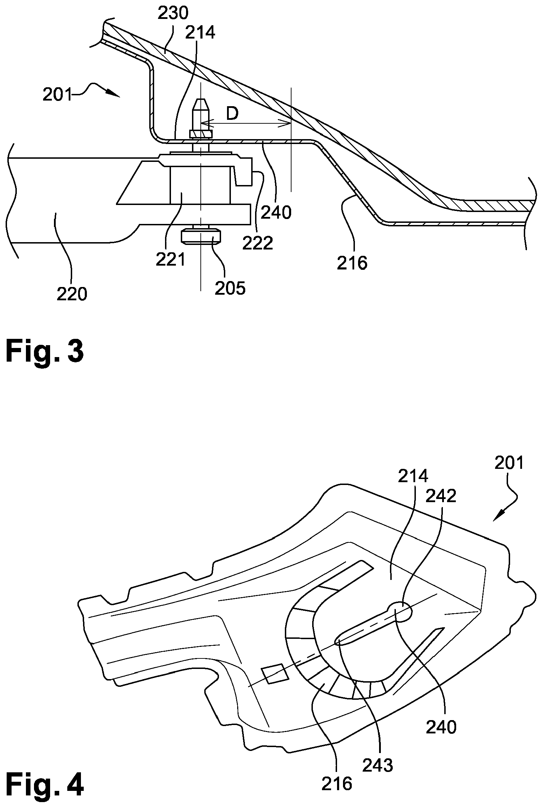

Les figures 3 et 4 montrent un mode de réalisation différent de l'interface de fixation selon l'invention. Le dispositif reprend les caractéristiques du dispositif de la figure 2 avec les différences et/ou compléments suivants. L'interface 201 est de préférence façonnée à partir d'une tôle métallique ayant une épaisseur de 2 mm. L'interface de fixation 201 sert à fixer le plancher du véhicule 230 au berceau du moteur 220. Le berceau moteur 220 est relié au plancher 230 au niveau de sa partie arrière par au moins un moyen de fixation 205, par exemple une vis. Une cale souple 221 est associée à la vis pour filtrer les vibrations du moteur et éviter qu'elles ne se propagent dans la caisse. L'interface de fixation présente une zone de montage 214 dotée de moyens pour coopérer avec la vis de fixation 205. Comme indiqué sur les figures 3 et 4, il s'agit d'une ouverture oblongue ou fente de guidage 240 de longueur D. Suite à un choc frontal du véhicule, la distance de coulissement qui sépare le berceau du plancher est graduellement réduite, comme le berceau va coulisser le long de la fente de guidage en direction du plancher. La fente de guidage 240 est apte à coopérer avec la vis de fixation 205 qui relie le berceau du moteur au plancher du véhicule. A cette fin, une partie à section correspondante à la section de la vis est prévue à une première extrémité 242 de la fente 240. La fente se prolonge en direction du plancher ou de l'habitacle du véhicule par une zone allongée de largeur plus restreinte et qui se rétrécit de préférence. Une butée d'arrêt 243 est de préférence prévue à la deuxième extrémité de la fente.

L'interface comprend une surface d'appui 216 contre laquelle la face arrière 222 du berceau moteur va venir en contact lorsque la force d'une collision entraîne une translation du moteur et de son berceau en direction de l'habitacle. La surface d'appui 216 est de préférence formée par emboutissage en demi-cercle ouvert vers l'avant du véhicule, c'est-à-dire dans la direction du berceau du moteur. De même, la surface d'appui présente de préférence une inclinaison par rapport à la zone de fixation 214. Cette disposition permet d'augmenter la distance de coulissement D par rapport à l'exemple de la figure 2, tout en diminuant le seuil d'effort suite auquel le berceau déforme la surface d'appui. L'ajustement de la longueur de fente de guidage, du couple de serrage de la vis de fixation et la fragilisation de la surface d'appui permettent d'adapter le dispositif en fonction notamment de la masse du véhicule qu'il équipe.

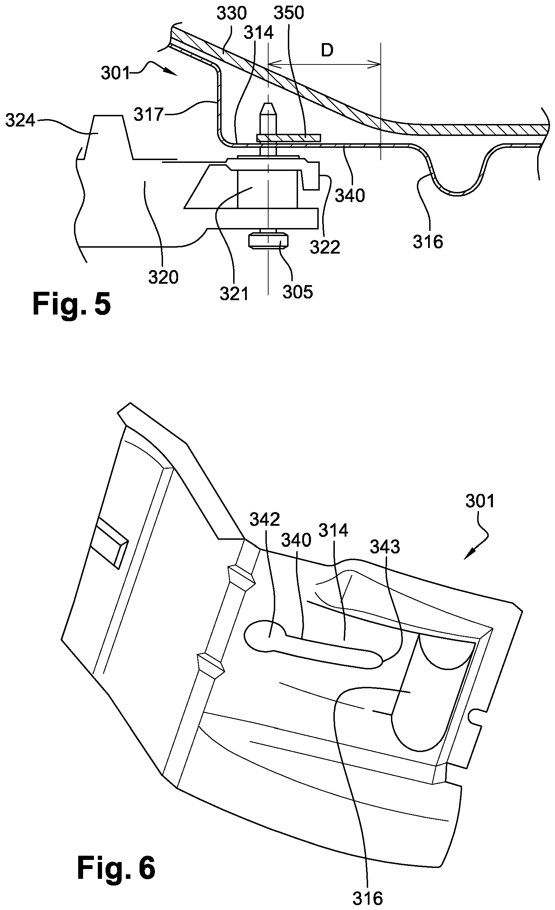

Les figures 5 et 3 montrent un mode de réalisation alternatif de l'interface de fixation selon l'invention. Le dispositif reprend les caractéristiques des dispositifs selon l'invention qui viennent d'être décrits avec les différences et/ou compléments suivants. L'interface de fixation 301 sert à fixer le plancher du véhicule 330 au berceau du moteur 320. Dans le mode de réalisation décrit, le berceau 320 est monté essentiellement en porte à faux par rapport au plancher 330. L'effort d'un choc frontal se transmet donc intégralement au travers de la vis de fixation 305 et le berceau peut s'avancer librement au-dessous du plancher. Une cale souple 321 est associée à la vis 205 pour filtrer les vibrations du moteur et éviter qu'elles ne se propagent dans la caisse. L'interface de fixation présente une zone de montage 314 dotée de moyens pour coopérer avec la vis de fixation 305. Comme indiqué sur les figures 5 et 6, il s'agit d'une ouverture oblongue ou fente de guidage 340 de longueur D. La longueur D correspond à la distance de laquelle le berceau moteur pourra se rapprocher au plancher 330 suite à un choc frontal du véhicule. La fente de guidage 340 est apte à coopérer avec la vis de fixation 305 qui relie le berceau du moteur au plancher du véhicule. A cette fin, une partie à section correspondante à la section de la vis est prévue à une première extrémité 342 de la fente 340. La fente se prolonge en direction du plancher ou de l'habitacle du véhicule par une zone allongée de largeur plus restreinte et qui se rétrécit de préférence. Une butée d'arrêt 343 est de préférence prévue à la deuxième extrémité de la fente.

Le dispositif comprend un moyen 350 tel qu'une plaque de matage par exemple, qui sert à maintenir la vis 305 en place à la première extrémité 342 de la fente de guidage 340 en absence de choc. La plaque de matage 350 comprend un trou de section correspondante à la section de la vis 305 pour recevoir la vis. La plaque est apte à se désolidariser de la zone de montage 314 suite à l'application d'un effort d'une intensité se situant au-delà d'une intensité seuil. Dépassé cet effort, la vis 305 peut coulisser le long de la fente de guidage.

A titre d'exemple, la plaque de matage est fixée par une série de points de soudure électrique disposés autour du trou de réception de la vis, dont la position correspond à la première extrémité 342 de la fente de guidage 340. Les points de soudure sont moins nombreux ou absents dans la zone qui correspond à la direction dans laquelle la fente de guidage se prolonge vers sa deuxième extrémité 343. D'autres réalisations visant au même résultat seront à la portée de l'homme du métier.

L'interface comprend une surface d'appui 316 disposée sur sa surface inférieure, contre laquelle la face arrière 322 du berceau moteur va venir en contact lorsque la force d'une collision entraîne une translation du moteur et de son berceau en direction de l'habitacle. Alternativement ou de manière complémentaire, le dispositif comprend une deuxième surface d'appui 317 contre laquelle une butée correspondante 324 du berceau 320 va venir en contact lorsque la force d'une collision entraîne une translation du moteur et de son berceau en direction de l'habitacle. Ces surfaces d'appui 316 et 317 aident à limiter l'envergure du recul du berceau 320 en direction du plancher 330, et limitent ainsi le risque d'intrusion de l'habitacle.

## Revendications

1. Interface de fixation (101 ; 201 ; 301) d'un plancher de véhicule à un berceau moteur, l'interface présentant une zone de montage (114 ; 214 ; 314) destinée à recevoir des moyens de fixation pour la fixation du berceau sur le plancher, la zone de montage (114 ; 214 ; 314) comprenant une fente de guidage (140 ; 240 ; 340) destinée à faciliter un rapprochement entre le berceau et le plancher dans la direction avant-arrière du véhicule suite à un choc frontal du véhicule, **caractérisée en ce qu'**elle comprend au moins une surface d'appui (116 ; 216 ; 316, 317) contre laquelle le berceau entre en contact lorsqu'il se rapproche du plancher.

2. Interface de fixation (101 ; 201 ; 301) selon la revendication 1, **caractérisée en ce que** la fente de guidage (140 ; 240 ; 340) est apte à coopérer avec les moyens de fixation, et notamment avec une vis, au niveau d'une première extrémité (142 ; 242 ; 342), et **en ce que** la fente est délimitée par une butée d'arrêt au niveau d'une deuxième extrémité (143 ; 243 ; 343).

3. Interface de fixation (101 ; 201 ; 301) selon une quelconque des revendications 1 ou 2, **caractérisée en ce qu'**elle comprend des moyens (350) destinés à maintenir les moyens de fixation en place en l'absence d'un choc du véhicule, les dits moyens (350) comprenant une zone à résistance amoindrie le long de la direction de la fente de guidage (340).

4. Interface de fixation selon l'une quelconque des revendications précédentes, **caractérisée en ce que** la longueur de la fente de guidage (140 ; 240 ; 340) est supérieure à la distance nécessaire au berceau pour entrer en contact avec au moins une des surfaces d'appui (116 ; 216 ; 316 , 317).

5. Interface de fixation (101 ; 201 ; 301) selon une quelconque des revendications précédentes, **caractérisée en ce que** une surface d'appui (116, 216, 316) contre laquelle la face arrière du berceau entre en contact lorsqu'il se rapproche du plancher, forme un angle non droit avec la zone de montage (114, 214, 314).

6. Interface de fixation (101 ; 201 ; 301) selon une quelconque des revendications précédentes, **caractérisée en ce que** au moins une surface d'appui (317) est disposée de façon à entrer en contact avec un ergot correspondant du berceau lorsque celui se rapproche du plancher.

7. Interface de fixation (101 ; 201 ; 301) selon une quelconque des revendications précédentes, **caractérisée en ce que** au moins une des surfaces d'appui (116; 216 ; 316, 317) est une surface à déformation programmée sous l'effet d'un appui du berceau suite à un choc frontal du véhicule.

8. Interface de fixation (101 ; 201 ; 301) selon une quelconque des revendications précédentes, **caractérisée en ce que** l'interface est issue d'un procédé d'emboutissage d'une tôle métallique ayant une épaisseur comprise entre 2 et 2,2 mm.

9. Véhicule automobile comprenant un plancher et un berceau moteur fixé au dit moteur, **caractérisé en ce que** le plancher présente une interface de fixation selon une quelconque des revendications précédentes pour sa fixation avec le berceau moteur.

## Patentansprüche

1. Schnittstelle (101; 201; 301) zur Befestigung eines Fußbodens an einem Motorträger, wobei die Schnittstelle eine Montagezone (114; 114; 314) aufweist, die dazu bestimmt ist, Befestigungsmittel für das Befestigen des Trägers auf dem Boden aufzunehmen, wobei die Montagezone (114; 214; 314) einen Führungsschlitz (140; 240; 340) umfasst, der dazu bestimmt ist, ein Annähern zwischen dem Träger und dem Boden in die Vorwärts-Rückwärts-Richtung des Fahrzeugs im Anschluss an einen Frontaufprall des Fahrzeugs zu erleichtern, **dadurch gekennzeichnet, dass** sie mindestens eine Auflagefläche (116; 216; 316, 317) umfasst, gegen die der Träger in Berührung tritt, wenn er sich dem Boden nähert.

2. Befestigungsschnittstelle (101; 201; 301) nach Anspruch 1, **dadurch gekennzeichnet, dass** der Führungsschlitz (140; 240; 340) geeignet ist, um mit den Befestigungsmitteln und insbesondere mit einer Schraube im Bereich eines ersten Endes (142; 242; 342) zusammenzuwirken, und dass der Schlitz durch einen Stoppanschlag im Bereich eines zweiten Endes (143; 243; 343) abgegrenzt ist.

3. Schnittstelle (101; 201; 301) nach einem der Ansprüche 1 oder 2, **dadurch gekennzeichnet, dass** sie Mittel (350) umfasst, die dazu bestimmt sind, die Befestigungsmittel bei Fehlen eines Aufpralls des Fahrzeugs an Ort und Stelle zu halten, wobei die Mittel (350) eine Zone mit verringerter Widerstandsfähigkeit entlang der Richtung des Schlitzes (340) umfassen.

4. Schnittstelle nach einem der vorhergehenden Ansprüche, **dadurch gekennzeichnet, dass** die Länge des Schlitzes (140; 240; 340) größer ist als der Abstand, der für den Träger erforderlich ist, um mit mindestens einer der Auflageflächen (116; 216; 316, 317) in Berührung zu treten.

5. Befestigungsschnittstelle (101; 201; 301) nach einem der vorhergehenden Ansprüche, **dadurch gekennzeichnet, dass** eine Auflagefläche (116, 216, 316), gegen die die Rückseite des Trägers in Berührung tritt, wenn er sich dem Boden nähert, einen Winkel, der kein rechter Winkel ist, mit der Montagezone (114, 214, 314) bildet.

6. Befestigungsschnittstelle (101; 201; 301) nach einem der vorhergehenden Ansprüche, **dadurch gekennzeichnet, dass** mindestens eine Auflagefläche (317) derart angeordnet ist, dass sie mit einem Dorn in Berührung kommt, der dem Träger entspricht, wenn er sich dem Boden nähert.

7. Befestigungsschnittstelle (101; 201; 301) nach einem der vorhergehenden Ansprüche, **dadurch gekennzeichnet, dass** mindestens eine der Auflageflächen (116; 216; 316, 317) eine Fläche mit programmierter Verformung unter der Einwirkung einer Auflage des Trägers im Anschluss an einen Frontaufprall des Fahrzeugs ist.

8. Befestigungsschnittstelle (101; 201; 301) nach einem der vorhergehenden Ansprüche, **dadurch gekennzeichnet, dass** die Schnittstelle aus einem Stanzverfahren eines Metallblechs, das eine Stärke zwischen 2 und 2,2 mm hat, hervorgeht.

9. Kraftfahrzeug, das einen Boden und einen Motorträger, der an dem Motor befestigt ist, umfasst, **dadurch gekennzeichnet, dass** der Boden eine Befestigungsschnittstelle nach einem der vorhergehenden Ansprüche für seine Befestigung an dem Motorträger hat.

## Claims

1. An interface (101; 201; 301) for attaching a vehicle floor to an engine cradle, the interface having an assembly region (114; 214; 314) intended to receive attachment means for attaching the cradle to the floor, the assembly region (114; 214; 314) including a guiding slot (140; 240; 340) intended to facilitate an approach between the cradle and the floor in the front-rear direction of the vehicle following a frontal impact of the vehicle, **characterized in that** it includes at least one support surface (116; 216; 316, 317) against which the cradle comes into contact when it approaches the floor.

2. The interface (101; 201; 301) for attaching according to claim 1, **characterized in that** the guiding slot (140; 240; 340) is able to cooperate with the attachment means, and in particular with a screw, at the level of a first end (142; 242; 342), and **in that** the slot is delimited by an end stop at the level of a second end (143; 243; 343).

3. The interface (101; 201; 301) for attaching according to any one of claims 1 or 2, **characterized in that** it includes means (350) intended to hold the attachment means in place in the absence of an impact of the vehicle, said means (350) including a zone of reduced resistance along the direction of the guiding slot (340).

4. The interface for attaching according to any one of the preceding claims, **characterized in that** the length of the guiding slot (140; 240; 340) is greater than the distance necessary for the cradle to come into contact with at least one of the support surfaces (116; 216; 316, 317).

5. The interface (101; 201; 301) for attaching according to any one of the preceding claims, **characterized in that** a support surface (116, 216, 316) against which the rear face of the cradle comes into contact when it approaches the floor, forms a non-right angle with the assembly region (114, 214, 314).

6. The interface (101; 201; 301) for attaching according to any one of the preceding claims, **characterized in that** at least one support surface (317) is disposed so as to come into contact with a corresponding lug of the cradle when it moves closer to the floor.

7. The interface (101; 201; 301) for attaching according to any one of the preceding claims, **characterized in that** at least one of the support surfaces (116; 216; 316, 317) is a programmed deformation surface under the effect of a support of the cradle following a frontal impact of the vehicle.

8. The interface (101; 201; 301) for attaching according to any one of the preceding claims, **characterized in that** the interface results from a stamping process of a metallic sheet having a thickness comprised between 2 and 2.2 mm.

9. A motor vehicle including a floor and an engine cradle attached to said engine, **characterized in that** the floor has an attaching interface according to any one of the preceding claims for its attaching to the engine cradle.
